# EUROPÄISCHE PATENTSCHRIFT

(11) **EP 3 838 807 B1**
(45) Veröffentlichungstag und Bekanntmachung des Hinweises auf die Patenterteilung: **06.03.2024**
(21) Anmeldenummer: 20205092.8
(22) Anmeldetag: 02.11.2020
(51) Int. Cl.: B65G 1/137

(54) **REICHWEITEN-VERLÄNGERUNG FÜR ROBOTER-KOMMISSIONIERSYSTEME**
RANGE EXTENSION FOR ROBOTIC PICKING SYSTEMS
PROLONGEMENT DE LA PORTÉE POUR SYSTÈMES ROBOTIQUES DE PRÉPARATION DE COMMANDES

(30) Priorität: 20.12.2019 DE 102019135445
(43) Veröffentlichungstag der Anmeldung: 23.06.2021
(73) Patentinhaber: IGZ Ingenieurgesellschaft für logistische Informationssysteme mbH, 95685 Falkenberg (DE)
(72) Erfinder: Zrenner, Johann, 95685 Falkenberg (DE)
(74) Vertreter: Strehl Schübel-Hopf & Partner

(56) Entgegenhaltungen:
- WO-A1-2012/163666
- DE-A1-102018 114 026
- US-A1- 2011 170 998
- US-A1- 2016 244 262

## Beschreibung

Die Erfindung betrifft ein Kommissioniersystem mit einem Roboter und einem Greifarm zur Entnahme eines Artikels aus einem Quellbehälter und zur Ablage des Artikels in einem Zielbehälter nach dem Oberbegriff des Anspruchs 1.

Aus der US 9 174 343 B2 ist ein gattungsgemäßes Kommissioniersystem bekannt und aus der WO 2018 / 132 855 A1 sind Kommissioniersysteme mit Förderspuren und Kommissionierrobotern bekannt.

Es ist ferner bekannt, Kommissionierroboter nachrüstbar auszugestalten, so dass sie beispielsweise mit Rollen an einen ansonsten auch von einer menschlichen Kommissionierperson bedienbaren Kommissionierplatz gerollt oder gefahren werden können, um dort Kommissionieraufträge auszuführen, so dass der Kommissionierplatz wahlweise mit einem Roboter oder einer menschlichen Kommissionierperson betrieben werden kann.

Derartige Kommissioniersysteme mit Robotern arbeiten derzeit zuverlässig für Single-Order Kommissionieraufträge, in denen nur ein Quell- und Zielbehälter gleichzeitig bedient werden muss. Multi-Order-Kommissionierung bedeutet dagegen, dass Waren aus einem Quellbehälter während desselben Kommissioniervorgangs auf mehrere Zielbehälter/Kartons verteilt werden, beispielsweise wenn mehrere Kunden den gleichen Artikel bestellt haben oder ein Kunde mehrere gleichartige Pakete bestellt hat. Bei vielen Kommissionieranlagen werden deshalb am Kommissionierarbeitsplatz jeweils mehrere Zielbehälter/Kartons aufgestellt, und durch entsprechende Optimierungen des Kommissionierauftrags wird versucht, möglichst viele Multi-Order-Picks pro angedientem Quellbehälter zu erreichen.

Ein weiterer Grund für das Aufstellen von mehreren Zielbehältern an einem Arbeitsplatz kann darin liegen, eine höhere Versorgungsleistung von Quellbehältern pro Arbeitsplatz sicherzustellen, beispielsweise wenn Kommissionierreihenfolgen pro Zielbehälter einzuhalten sind, jedoch die Lagertechnik/-Steuerung keine sequenzierte Quellbehälterandienung in hoher Leistung liefern kann.

Da jedoch Standard-Roboter für Bin-Picking je nach Arbeitsplatztyp nur 1 oder maximal 2 Zielbehälter erreichen können, ist hierfür aktuell eine Roboterkommissionierung nicht möglich. Während menschliche Kommissionierer zum Bedienen mehrerer auf einer Förderstrecke oder einem Tisch angeordneter Zielbehälter/Versndkartons einen Schritt gehen können, wenn der Abstand größer als die Reichweite ihrer Arme ist, ist dies für Roboter nicht ohne weiteres möglich. Übliche Roboter für diesen technischen Zweck haben eine Reichweite in der Größenordnung von 1,2 bis 1,5 m. Mit zunehmender Reichweite steigen das Gewicht, der Platzbedarf und die Kosten von Industrierobotern sehr stark an. Insbesondere Lösungen mit mobilen - d.h. flexibel installierbaren und deinstallierbaren - Kommissionierrobotern sind mit größeren Reichweiten kaum noch realistisch umsetzbar.

Es sind auch Konstellationen denkbar, in denen mehrere Quellbehälter bedient werden müssen.

Die DE 10 2018 114 026 A1 offenbart ein robotergestütztes Kommissioniersystem mit einem mit einem Sorter. Der Sorter umfasst eine schleifenförmige Hauptstrecke und mehrere Nebenstrecken, die abschnittsweise parallel zur Hauptstrecke verlaufen und an denen Roboter die Artikel in den Sorter-Schalen legen oder aus diesen entnehmen können. Die DE 10 2018 114 026 A1 offenbart ein Kommissioniersystem gemäß dem Oberbegriff des Anspruchs 1 sowie ein Verfahren zum Kommissionieren von Waren gemäß dem Oberbegriff des Anspruchs 9.

Die US 2014 / 0 244 026 A1 offenbart ein robotergestütztes Kommissioniersystem mit einer karussellartigen Fördertechnik-Anordung.

Der Erfindung liegt die Aufgabe zugrunde, ein robotergestütztes Kommissioniersystem bereitzustellen, das auch mit einem Greifarm mit vergleichswiese geringer Reichweite eine große Zahl von Quell- oder Zielbehältern gleichzeitig bedienen kann.

Die Aufgabe wird durch eine Vorrichtung zum Kommissionieren von Waren mit den Merkmalen des Anspruchs 1 gelöst. Vorteilhafte Ausgestaltungen der Erfindung ergeben sich aus den Unteransprüchen.

Die Erfindung geht aus von einer Vorrichtung zum Kommissionieren von Waren mit zwei Fördertechnikspuren, einer Stellfläche, einem oder mehreren Umsetzern und einem Kommissionierroboter.

Eine erste Fördertechnikspur ist zum An- und Abtransport von Quellbehältern ausgelegt und eine zweite Fördertechnikspur ist zum An- und Abtransport von Zielbehältern ausgelegt. Die Stellfläche umfasst Stellplätze zum Aufstellen mehrerer Zielbehälter/Kartons, wobei die Stellfläche eine parallel zu der zweiten Fördertechnikspur verlaufende Längsrichtung hat. Die Stellfläche ist nicht auf eine flache oder starre Fläche beschränkt sondern kann, wie weiter untern beschrieben, auch von Förderern gebildet sein. Der Umsetzer dient zum Umsetzen eines Zielbehälters von der zweiten Förderspur auf die Stellfläche. Der Kommissionierroboter umfasst einen Greifarm mit einer vorgegebenen Reichweite zum Kommissionieren von Waren aus dem Quellbehälter in den Zielbehälter .

Es wird vorgeschlagen, dass die Stellfläche wenigstens einen Stellplatz umfasst, der in wenigstens einer Konfiguration der Vorrichtung außerhalb der Reichweite des Greifarms liegt und die Vorrichtung mit einer Verschiebeeinheit ausgestattet ist, die dazu ausgelegt ist, einen auf dem wenigstens einen Stellplatz außerhalb der Reichweite stehenden Zielbehälter relativ zum Kommissionierroboter zu verschieben, so dass der Zielbehälter in der Längsrichtung der Stellfläche in die Reichweite des Greifarms verschoben wird. Durch die Verschiebeeinheit kann eine große Zahl von Zielbehältern gleichzeitig bedient werden, beispielsweise für die oben beschriebenen Szenarien. Die Verschiebeeinheit kann alternativ zu der oben beschriebenen Verschiebeeinheit in den Sockel des Kommissionierroboters integriert sein und den Roboterarm relativ zur Stellfläche verschieben oder umgekehrt. Als "gleichzeitige" Bedienung wird dabei eine Sequenz von verschiedene Zielbehälter betreffenden Picking-Vorgängen betroffen, die nicht durch ein Einlagern oder Auslagern der Quellbehälter oder mehrfaches andienen der Zielbehälter unterbrochen werden muss.

Analog kann auch eine entsprechende Verschiebeeinheit für mehrere Zielbehälter vorgesehen sein, falls dies erforderlich ist. Der Zielbehälter kann ein Karton, insbesondere Versandkarton sein. Die Erfindung ist auch auf Zielbehälter anderer Art anwendbar, z.B. auf Kunststoff- oder Gitterboxen oder auch auf Paletten. Ferner kann alternativ zu oder zusätzlich zur Verschiebeeinheit für die Zielbehälter eine Verschiebeeinheit für Quellbehälter vorgesehen sein, die eine gleichzeitige Bedienung mehrerer Quellbehälter ermöglicht. In der folgenden Beschreibung müssen dazu nur die Quellbehälter und die Zielbehälter vertauscht werden.

Die Verschiebeeinheit kann insbesondere auch für Anlagen, die vom manuellen Betrieb auf Roboterbetrieb umgerüstet werden sollen, nachgerüstet werden.

Durch die Verschiebeeinheit kann ein zunächst außerhalb der Reichweite stehender Behälter in die Reichweite des Kommissionierroboters verschoben werden und anschließend bedient werden. Dadurch wird die Reichweite des Roboters effektiv erweitert.

Die Verschiebeeinheit ist vorzugsweise motorgetrieben, insbesondere automatisch gemeinsam mit dem Kommissionierroboter steuerbar. Sie kann ferner kinematisch mit dem Greifarm bzw. einem Freiheitsgrad desselben gekoppelt sein, so dass die Bewegung des Greifarms in eine Richtung eine Bewegung der Stellfläche in die entgegengesetzte Richtung bewirkt und umgekehrt. Eine solche Kopplung kann durch Software oder Mechanik umgesetzt werden.

Das Merkmal, wonach ein Stellplatz innerhalb der Reichweite bzw. außerhalb der Reichweite des Greifarms liegt ist so zu verstehen, dass ein auf dem Stellplatz aufgestellter Zielbehälter in der Reichweite bzw. außerhalb der Reichweite liegt, der Kommissionierroboter also gut in den Zielbehälter greifen kann und Artikel ablegen kann.

In einer Ausgestaltung der Erfindung wird vorgeschlagen, dass die Verschiebeeinheit ein Riemenförderer ist. Dadurch kann ein geräuscharmer Betrieb gewähreistet werden und ein Verrutschen oder Querstellen der Zielbehälter (insbesondere leere, leichte Versandkartons) kann auch bei mehrmaligem Hin- und Herfahren der Verschiebeeinheit vermieden werden. Der Umsetzer kann dann als Rollenhubtisch ausgebildet sein.

Ferner kann die Verschiebeeinheit ein Rollenförderer sein. In diesem Fall kann der Umsetzer ein Riemenförderer sein. Falls die Verschiebeeinheit ein Rollenförderer ist, kann diese in einer besonders vorteilhaften Ausgestaltung der Erfindung Sperren umfassen, die zwischen zwei Rollen hochgefahren werden können und den Transport eines Behälters kurzfristig blockieren. Dadurch können schräg zur Längsrichtung des Förderers stehende Behälter gerade ausgerichtet werden.

Vorzugsweise ist die Anzahl der Umsetzer kleiner als die Anzahl der Stellplätze. Die Verschiebeeinheit kann beim Ein- oder Auslagern eines Behälters diesen zum Umsetzer bewegen, so dass nicht jeder der Stellplätze mit einem Umsetzer ausgestattet werden muss. Dadurch können die Anzahl der Umsetzer und der damit verbundene Kosten- und Wartungsaufwand reduziert werden.

Erfindungsgemäß umfasst die Vorrichtung eine Steuerung zum koordinierten Steuern des Kommissionierroboters und der Verschiebeeinheit. Durch die koordinierte Steuerung kann die Verschiebeeinheit wie ein zusätzlicher Freiheitsgrad zur Verlängerung der Reichweite genutzt werden.

Eine Steuerung ist gemäß der Erfindung dazu ausgelegt, während mehrerer aufeinander folgender Multi-Order-Kommissioniervorgängen Zielbehälter mit Hilfe der Verschiebeeinheit mehrfach hin und her zu verschieben, ohne dass dazu die Fördertechnikspur betätigt werden muss. Dadurch sind entscheidende Zeiteinsparungen realisierbar.

In einer besonders vorteilhaften Ausgestaltung der Erfindung wird vorgeschlagen, dass die Steuerung dazu ausgelegt ist, simultan mit der Entnahme eines zu kommissionierenden Artikels aus einem Quellbehälter einen Zielbehälter, in welchen der Artikel kommissioniert werden soll, mit Hilfe der Verschiebeeinheit in die Reichweite des Greifarms zu verschieben. Durch die simultane Ausführung der Entnahme und des Verschiebevorgangs führt letzterer gegenüber Verfahren ohne die simultane Ausführung nicht zu einer Wartezeit bei der Ablage in den Zielbehälter.

Alternativ oder ergänzend dazu kann die Steuerung dazu ausgelegt sein, simultan mit der Ablage eines zu kommissionierenden Artikels in einem Zielbehälter einen Quellbehälter, aus welchem der in einem Kommissionierauftrag als nächstes folgende Artikel entnommen werden soll, mit Hilfe der Fördertechnik in die Reichweite des Greifarms zu verschieben.

In einer besonders vorteilhaften Ausgestaltung der Erfindung wird vorgeschlagen, dass der Kommissionierroboter ein mobiler Roboter ist, der von der Stellfläche entfernt werden kann, um einen Kommissionierarbeitsplatz für eine menschliche Kommissionierperson freizugeben. Als mobiler Roboter wird in diesem Zusammenhang ein Roboter bezeichnet, der nachrüstbar ist und/oder bei Bedarf am Kommissionierplatz aufgestellt und abgebaut werden kann, der aber beim Kommissionieren unbewegt bleibt. Ein mobiler Kommissionierroboter ist insbesondere mit Rollen oder Rädern ausgestattet und kann so einfach bewegt werden, insbesondere mit menschlicher Muskelkraft.

Steuerungsseitig kann die Verschiebeeinheit verriegelt werden, wenn der Roboter in den Behälter eingreift, insbesondere dann kann eine Verriegelung erfolgen, wenn der Roboter in einem Störungs-Betriebszustand geschaltet wurde. Dadurch können Kollisionen zwischen Greifer und Behälter vermieden werden. In weiteren Ausgestaltungen der Erfindung wird vorgeschlagen, dass der Roboter während der Bewegung in den Behälter eingreift und den Greifer synchron mit der Verschiebeeinheit in deren Längsrichtung bewegt. Dadurch kann die Kommissionierleistung erhöht werden, weil Wartezeiten bis zum Antransport und zum Stoppen der Verschiebeeinheit vermieden werden können, wobei gleichzeitig Kollisionen vermieden werden.

Ferner wird vorgeschlagen, dass die Verschiebeeinheit einzeln steuerbare Segmente umfasst, die ein Verschieben der Zielbehälter unabhängig voneinander erlauben. Lücken in der Reihe der Zielbehälter können so geschlossen werden, die beispielsweise entstehen können, wenn ein in einem mittleren Bereich der Reihe angeordneter Zielbehälter abtransportiert wurde. Die Reihe der Zielbehälter kann also verdichtet werden. Neue Zielbehälter müssen nicht auf den frei gewordenen Platz des abtransportierten Zielbehälters gestellt werden, sondern können dann immer von einer Seite aus zugeführt werden, was Potenziale für Zeitersparnis eröffnet und die Anzahl der notwendigen Umsetzer reduziert.

Insbesondere wird es möglich, den für den nächsten Kommissionierauftrag oder Kommissionierschritt benötigten Behälter schon in das Blickfeld der Kamera und in die Reichweite des Roboters zu verschieben, bevor ein zusätzlicher neuer Zielbehälter von der Fördertechnik auf die Verschiebeeinheit umgesetzt wird. Die Aufnahme des Zielbehälters durch die Kamera und die daran anschließende Bildverarbeitung können daher bereits starten, während der Umsetzvorgang läuft.

In einer weiteren Ausgestaltung der Erfindung ist die Verschiebeeinheit dazu ausgelegt, Behälter mit unterschiedlichen Größen zu verschieben und zu transportieren, beispielsweise durch das Vorsehen von mehreren Riementeilungen.

Ein weiterer Aspekt der Erfindung betrifft ein Verfahren zum Kommissionieren von Waren, umfassend die Schritte An- und Abtransport von Quellbehältern mit einer ersten Fördertechnikspur, An- und Abtransport von Zielbehältern mit einer zweiten Fördertechnikspur, Aufstellen mehrerer Zielbehälter auf eine Stellfläche, wobei die Stellfläche eine parallel zu der zweiten Fördertechnikspur verlaufende Längsrichtung hat, Umsetzen eines Zielbehälters von der zweiten Förderspur auf die Stellfläche, und Kommissionieren von Waren aus dem Quellbehälter in den Zielbehälter mit einem Kommissionierroboter mit einem Greifarm, der eine vorgegebene Reichweite hat.

Es wird vorgeschlagen, dass die Stellfläche wenigstens einen Stellplatz umfasst, der in wenigstens einer Konfiguration der Vorrichtung außerhalb der Reichweite des Greifarms liegt und das Verfahren ferner das Verschieben eines auf dem weigstens einen Stellplatz stehenden Zielbehälters relativ zum Kommissionierroboter in der Längsrichtung der Stellfläche mittels einer Verschiebeeinheit umfasst, so dass der wenigstens eine Zielbehälter in die Reichweite des Greifarms verschoben wird. Erfindungsgemäß wird es auch vorgeschlagen, dass das Verfahren ferner das mehrfache hin und her Verschieben der Zielbehälter mit Hilfe der Verschiebeeinheit während mehrerer aufeinander folgender Multi-Order-Kommissioniervorgänge ohne die Betätigung der zweiten Fördertechnikspur umfasst. 1

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen. Der Fachmann wird die Merkmale auch einzeln betrachten und zu weiteren Kombinationen oder Unterkombinationen zusammenfassen, um die Erfindung, wie sie in den Ansprüchen definiert ist, an seine Bedürfnisse oder an spezielle Anwendungsbereiche anzupassen.

Dabei zeigen:
Fig. 1 eine Vorrichtung zum Kommissionieren von Waren nach einem ersten Ausführungsbeispiel der Erfindung in einer Draufsicht;
Fig. 2a der Kommissionierplatz aus Fig. 1 mit dem Riemenförderer in einer Stellung;
Fig. 2b der Kommissionierplatz aus Fig. 1 mit dem Riemenförderer in einer anderen Stellung;
Fig. 3 eine Vorrichtung zum Kommissionieren von Waren nach einem zweiten Ausführungsbeispiel der Erfindung;
Fig. 4 eine Vorrichtung zum Kommissionieren mit einer Verschiebeeinheit zum Verschieben eines Roboter-Greifarms; und
Fig. 5a - 5d eine Vorrichtung zum Kommissionieren und Kommissionierverfahren nach einem weiteren Ausführungsbeispiel der Erfindung.

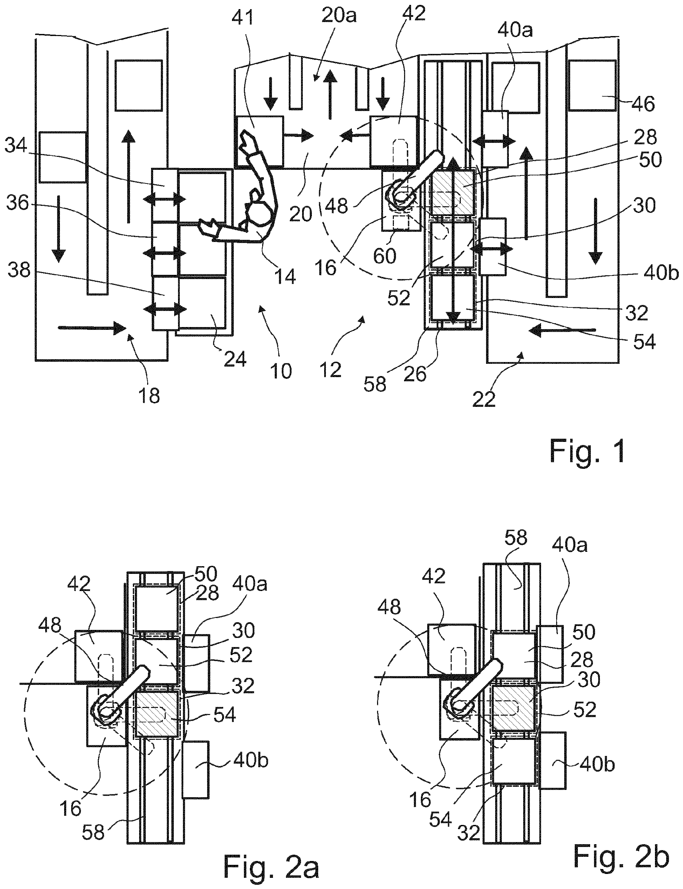

Figur 1 zeigt als erstes Ausführungsbeispiel der Erfindung eine Vorrichtung zum Kommissionieren von Waren mit zwei Arbeitsplätzen 10, 12. Der in Fig. 1 linke Arbeitsplatz 10 wird von einem menschlichen Kommissionierer 14 bedient und der in Fig. 1 rechte Arbeitsplatz 12 von einem Kommissionierroboter 16. Jeder der Arbeitsplätze 10, 12 ist mit zwei Fördertechnikspuren 18, 20, 22 und einer Stellfläche 24, 26 mit drei Stellplätzen 28, 30, 32 für drei Zielbehälter 50, 52, 54 ausgestattet. Der linke Arbeitsplatz 10 umfasst zudem drei Umsetzer 34, 36, 38 und der rechte Arbeitsplatz zwei Umsetzer 40a, 40b und den Kommissionierroboter 16.

Eine erste Fördertechnikspur 20 der beiden Kommissionierplätze ist zum An- und Abtransport von Quellbehältern 41, 42 ausgelegt. Der Abtransport erfolgt auf einer für beide Kommissionierplätze gemeinsam genutzten Abtransportspur 20a. Eine zweite Fördertechnikspur 18, 22 ist jeweils zum An- und Abtransport von Zielbehältern 50, 52, 54 ausgelegt. Die Fördertechnikspuren 18, 20, 22 sind jeweils als Rollenförderer ausgestaltet. Andere Ausgestaltungen sind denkbar.

Die Stellfläche 26 des rechten Kommissionierplatzes 12 ist die Oberfläche einer als Riemenförderer ausgestalteten Verschiebeeinheit 58, deren Gesamtlänge das Aufstellen von wenigstens 5 Zielbehältern erlauben würde, wobei in der erfindungsgemäßen optimalen Vorrichtung jedoch drei Zielbehälter 50, 52, 54 auf nebeneinander liegenden Stellplätzen 28, 30, 32 aufgestellt werden. Es sind jedoch auch mehr oder auch weniger Zielbehälter möglich, die Anordnung ändert sich analog. Die Stellplätze 28, 30, 32 sollen im Folgenden als rechter Stellplatz 32, mittlerer Stellplatz 30 und linker Stellplatz 28 bezeichnet werden, wobei die Bezeichnungen "rechts" und "links" sich auf die Blickrichtung des Kommissionierroboters 16 in Richtung der Stellfläche 26 beziehen.

Eine Steuerung 60 des Systems ist dazu ausgelegt, während eines Multi-Order-Kommissioniervorgangs Zielbehälter 50, 52, 54 mehrfach hin und her zu verschieben, so dass immer derjenige Zielbehälter 50, 52, 54, in den der nächste Artikel abgelegt werden soll, vor dem Roboter 16 bereitgestellt wird. Wenn beispielsweise drei gleiche Bestellungen mit jeweils mehreren gleichen Artikeln vorliegen, wird der Quellbehälter 42 mit dem ersten Artikel angedient und dann nacheinander jeweils einer der Artikel in einen der Zielbehälter 50, 52, 54 gelegt, wobei die Zielbehälter 50, 52, 54 zwischen den einzelnen Picks mit der Verschiebeeinheit 58 verschoben werden, ohne dass dazu die Fördertechnikspur 22 betätigt werden muss. Danach wird der Quellbehälter mit dem zweiten gemeinsamen Artikel angedient und wieder unterstützt durch die Verschiebeeinheit 58 auf die einzelnen Zielbehälter verteilt, usw..

Die Stellfläche 26 hat eine parallel zur zweiten Fördertechnikspur 22 verlaufende Längsrichtung und eine Höhe, die derjenigen eines Arbeitstischs eines menschlichen Kommissionierers 14 entspricht, so dass der Arbeitsplatz 12 bei entferntem Kommissionierroboter 16 bequem von einem Menschen genutzt werden könnte.

Die beiden Umsetzer 40a, 40b dienen zum Umsetzen eines Zielbehälters 50, 52, 54 von der zweiten Fördertechnikspur 22 auf die Stellfläche 26 und umgekehrt.

Zum Umsetzen eines zweiten Zielbehälters 52 auf den mittleren Stellplatz 30 kann der Riemenförderer in eine in Fig. 1 dargestellte Stellung bewegt werden, so dass der zweite Zielbehälter 52 bzw. der mittlere Stellplatz 30 vor dem Umsetzer 40b liegen. Alternativ könnte der Zielbehälter 52 in der in Fig. 2a dargestellten Stellung mit dem Umsetzer 40a umgesetzt werden. Ferner muss zum Umsetzen des eines ersten Zielbehälters 50 auf den vom Kommissionierroboter 16 aus betrachtet linken Stellplatz 28 der Riemenförderer in eine in Fig. 2b dargestellte Stellung bewegt werden, so dass der erste Zielbehälter 50 bzw. der linke Stellplatz 28 vor dem Umsetzer 40a liegen. In der gleichen, in Fig. 2b dargestellten Stellung kann ein dritter Zielbehälter 54 auf den vom Kommissionierroboter 16 aus betrachtet rechten Stellplatz 32 umgesetzt werden. In dieser Stellung liegt der dritte Zielbehälter 54 bzw. der rechte Stellplatz 32 vor dem Umsetzer 40b. Dies jeweils gilt für das Umsetzen von der Fördertechnikspur 22 auf die Stellfläche 26 und umgekehrt.

Der Kommissionierroboter 16 umfasst einen Greifarm 48 mit einer vorgegebenen Reichweite zum Kommissionieren von Waren aus dem Quellbehälter 42 in die Zielbehälter 50, 52, 54. In dem in Fig. 1 dargestellten Ausführungsbeispiel liegt nur der unmittelbar vor dem Kommissionierroboter 16 stehende Zielbehälter 52 vollständig innerhalb der Reichweite des Greifarms 48.

In der Stellung gemäß Fig. 1 der Verschiebeeinheit 58 liegen der rechte und der mittlere Zielbehälter 54, 52 außerhalb der Reichweite des Kommissionierroboters 16, in der mittleren Stellung (Fig. 2b) der Verschiebeeinheit 58 liegen der linke und rechte Zielbehälter 50, 54 außerhalb der Reichweite des Kommissionierroboters 16 und in der linken Stellung (Fig. 2a) der Verschiebeeinheit 58 liegen der linke und mittlere Zielbehälter 50, 52 außerhalb der Reichweite des Kommissionierroboters 16. In allen Konfigurationen liegen zwei der Stellplätze außerhalb der Reichweite des Greifarms 48. Da die Verschiebeeinheit 58 die Stellfläche relativ zum Kommissionierroboter 16 verschieben kann, können jedoch Zielbehälter auf jedem der Stellplätze 28, 30, 32 in die Reichweite des Greifarms 48 verschoben werden. Dadurch wird die Reichweite des Kommissionierroboters 16 effektiv erweitert. Da die Zielbehälter 50, 52, 54 in diesem Beispiel auf der gleichen Verschiebeeinheit 58 stehen, werden immer alle Zielbehälter 50, 52, 54 gemeinsam verschoben.

Eine Steuerung 60 der Vorrichtung ist mit einer Software ausgestattet, die den Kommissionierroboter 16 und die Verschiebeeinheit 58 in einer koordinierten Weise steuert, um wie oben beschrieben Zielbehälter 50, 52, 54 auf den Stellplätzen 28, 30, 32 zu beschicken oder umzusetzen. Durch die koordinierte Steuerung kann die Verschiebeeinheit 58 wie ein zusätzlicher Freiheitsgrad zur Verlängerung der Reichweite des Greifarms 48 genutzt werden.

Die Steuerungssoftware der Steuerung 60 verschiebt während der Entnahme eines zu kommissionierenden Artikels aus einem Quellbehälter 42 gleichzeitig mit Hilfe der Verschiebeeinheit 58 denjenigen der Zielbehälter 50, 52, 54 auf den Stellplätzen 28, 30, 32, in welchen der Artikel kommissioniert werden soll, in die Reichweite des Greifarms 48, so dass Entnahme aus dem Quellbehälter 42 und Bereitstellung des Zielbehälters 52 simultan erfolgen. Die Verschiebung der Zielbehälter 50, 52, 54 erfolgt im Schatten der Entnahme aus dem Quellbehälter 42, d.h. während der Kommissionierroboter 16 aus dem Quellbehälter 42 greift. Es wird durch die Verschiebung der Zielbehälter 50, 52, 54 keine Zeit verloren und die volle Roboter-Kommissionierleistung bleibt erhalten.

Das oben beschriebene Prinzip ist selbstverständlich durch Verlängerung der Verschiebeeinheit 58 auf Szenarien mit mehr als drei Stellplätzen erweiterbar, wobei gegebenenfalls auch mehr als zwei Umsetzer 40a, 40b vorgesehen sein können. In anderen denkbaren Ausführungsbeispielen ist nur ein einziger Umsetzer vorgesehen. Durch die Verschiebeeinheit 58 kann eine große Zahl von Zielbehältern gleichzeitig bedient werden.

Die Umsetzer 40a, 40b sind jeweils vor einem Stellplatz angeordnet, der außerhalb der Reichweite des Kommissionierroboters 16 liegt. Dadurch kann der An- und Abtransport von Zielbehältern gleichzeitig mit der Bedienung eines anderen, innerhalb der Reichweite des Kommissionierroboters 16 liegenden Zielbehälters erfolgen. Ein fertig befüllter Zielbehälter wird immer zuerst mit der Verschiebeeinheit 58 aus der Reichweite des Kommissionierroboters 16 verschoben und dann zum Abtransport mit dem Umsetzer 40 auf die Fördertechnikspur 20 umgesetzt. Dadurch kann der letztgenannte Vorgang gleichzeitig mit der Bedienung eines anderen Zielbehälters erfolgen, der mit dem gleichen Verschiebevorgang, der den fertig befüllten Zielbehälter aus der Reichweite verschoben hat, in die Reichweite des Kommissionierroboters 16 verschoben wurde.

Der linke Arbeitsplatz 10 in Fig. 1 zeigt einen manuell bedienten Multiorder-Kommissionier-Arbeitsplatz. Für eine ergonomische Kommissionierung sind in diesem Beispiel nur drei Zielbehälterpositionen sinnvoll. Der manuell bediente Multiorder-Kommissionier-Arbeitsplatz könnte ebenfalls mit einer Verschiebeeinheit ausgestattet sein, um den Arbeitsplatz durch Nachrüsten eines Kommissionierroboters 16 zeitweise oder permanent in einen vom Kommissionierroboter 16 bedienten Kommissionier-Arbeitsplatz umzuwandeln. Ist ein Arbeitsplatz von vorneherein gemäß der Erfindung mit einer Verschiebeeinheit ausgestattet, so kann auch bei Multiorderkommissionierung einfach zwischen manueller und Roboter-Bedienung gewechselt werden. Auch kann die Anzahl der Zielkartons/Behälter einfach variiert werden.

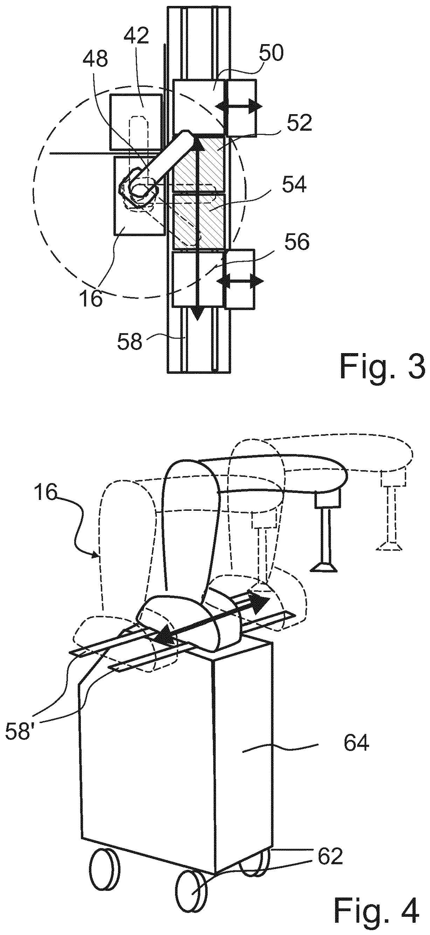

Figur 3 zeigt ein Ausführungsbeispiel einer Vorrichtung, die zum simultanen Bedienen bzw. Aufstellen von vier Zielbehältern 50, 52, 54, 56 ausgelegt ist. Die Reichweite des Kommissionierroboters 16 ist im Verhältnis zur Größe der Zielbehälter 50, 52, 54, 56 etwas größer als in dem in Fig. 1 dargestellten Ausführungsbeispiel, so dass gleichzeitig zwei der Zielbehälter 50, 52, 54, 56 vollständig innerhalb dieser Reichweite angeordnet werden können. Die Reihe der aufgestellten Zielbehälter 50, 52, 54, 56 kann mit der als Riemenförderer ausgestalteten Verschiebeeinheit 58 ausgehend von einer mittleren Stellung, die in Fig. 3 dargestellt ist, jeweils um einen Platz nach rechts oder nach links verschoben werden, um den am äußersten linken bzw. rechten Rand angeordneten Zielbehälter 50, 56 in die Reichweite des Kommissionierroboters 16 zu verschieben.

In dem Ausführungsbespiel aus Fig. 3 umfasst die Vorrichtung zwei Umsetzer 40a, 40b. Zum Umsetzen der Zielbehälter 50 - 56 wird, falls nötig, die Verschiebeeinheit 58 betätigt um die Zielbehälter 50 - 56 vor die Umsetzer 40a, 40b verschoben.

Der Erfindungsgedanke ist nicht auf eine Verschiebeeinheit 58 für Zielbehälter beschränkt. Auch Quellbehälter können auf einer Verschiebeeinheit angeordnet sein, um die Anzahl der vom Kommissionierroboter 16 bedienbaren Quellbehälter zu erhöhen, zum Beispiel für das Kommissionieren von Sets. Eine solche Verschiebeeinheit für Quellbehälter kann alternativ oder zusätzlich zur Verschiebeeinheit 58 für Zielbehälter vorgesehen sein.

Figur 4 zeigt einen Kommissionierroboter 16 zur Verwendung in einem Kommissioniersystem nach einem weiteren Ausführungsbeispiel der Erfindung. Der Kommissionierroboter 16 hat einen Sockel 64 mit Rollen 62 und kann zu einem Kommissionierplatz gerollt werden, der ohne den Kommissionierroboter 16 von einem Menschen bedient wird. Eine Verschiebeeinheit 58' ist auf dem Sockel 64 des Roboters 16 befestigt und trägt den Greifarm 48 des Kommissionierroboters 16, so dass dieser seitlich parallel zur Längsrichtung der Fördertechnikspur 22 hin und her verschoben werden kann, um so eine Relativbewegung zwischen Greifarm 48 und Zielbehältern zu erzeugen, die effektiv die Reichweite des Kommissionierroboters 16 erweitert.

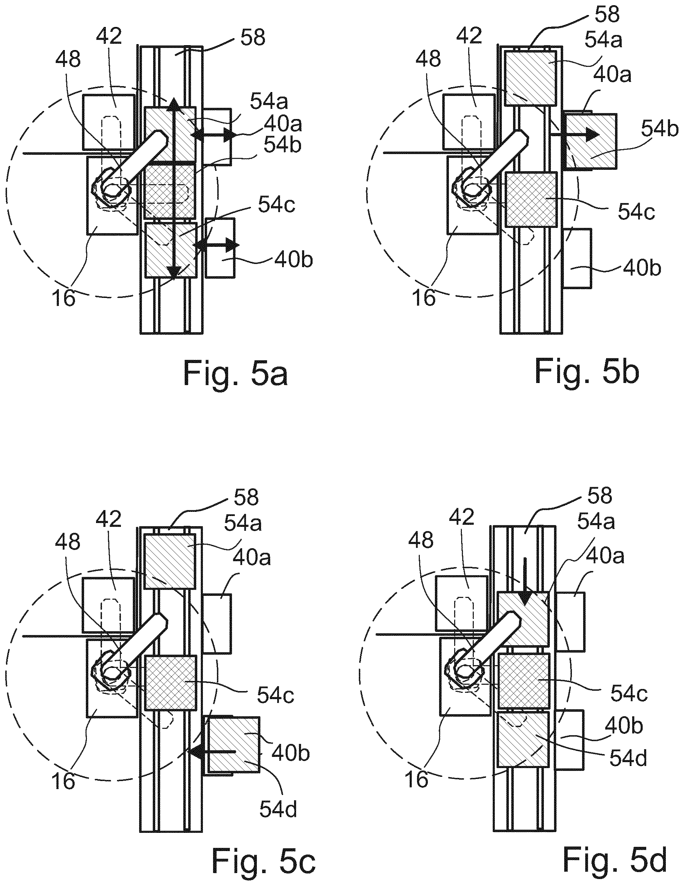

Die Figuren 5a - 5d zeigen ein weiteres Ausführungsbeispiel der Erfindung mit einer Verschiebeeinheit 58 mit unabhängig voneinander steuerbaren Segmenten, die eine unabhängige Verschiebung der Behälter ermöglichen.

Fig. 5a zeigt eine Konfiguration, in welcher drei Zielbehälter 54a - 54c auf einer Verschiebeeinheit 58 mit zwei Umsetzern 40a, 40b stehen und ein mit Kreuzschraffur gekennzeichneter Zielbehälter 54b durch den Kommissionierroboter 16 gefüllt bzw. beladen wird. Wenn der diesen Zielbehälter 54b betreffende Teil des Kommissionierauftrags abgeschlossen ist, wird der Zielbehälter 54b gemeinsam mit den anderen beiden Zielbehältern 54a, 54c zunächst durch die Verschiebeeinheit 58 um einen Platz nach links verschoben. Der Zielbehälter 54c steht dann für den nächsten Kommissionierschritt innerhalb der Reichweite des Kommissionierroboters 16 bereit und kann von einer oberhalb dieses Platzes angeordneten Kamera, insbesondere TOF-Kamera (nicht dargestellt) gescannt bzw. fotografiert werden, beispielsweise um bereits vorhandene Artikel zu scannen und einen Ablageplatz für den nächsten Artikel so zu bestimmen, dass das Schlichtmuster optimiert wird. Parallel zu diesem Scannen bzw. Fotografieren wird der fertig befüllte Zielbehälter 54b durch einen ersten Umsetzer 40a zum Abtransport auf die Fördertechnikspur 20 umgesetzt (Fig. 5b). Anschließend wird ein neuer Zielbehälter 54d mit Hilfe des Umsetzers 40b von der Fördertechnikspur 22 auf einen Stellplatz der Verschiebeeinheit 58 verschoben (Fig. 5c) und der Zielbehälter 54a wird durch Betätigung eines entsprechenden Segments der Verschiebeinheit 58 um einen Platz nach rechts verschoben, während die Zielbehälter 54c, 54d unbewegt bleiben. Eine durch das Umsetzen des Zielbehälters 54b entstandene Lücke wird dadurch geschlossen (Fig. 5d).

## Patentansprüche

1. Vorrichtung zum Kommissionieren von Waren, umfassend:
- eine erste Fördertechnikspur (20) zum An- und Abtransport von Quellbehältern (41, 42),
- eine zweite Fördertechnikspur (18, 22) zum An- und Abtransport von Zielbehältern (50, 52, 54),
- wenigstens eine Stellfläche (26) mit mehreren Stellplätzen (28, 30, 32) zum Aufstellen mehrerer Zielbehälter (50, 52, 54), insbesondere Kartons, wobei die Stellfläche (26) eine parallel zu einer derder zweiten Fördertechnikspuren (18, 22) verlaufende Längsrichtung hat,
- wenigstens einen Umsetzer (40) zum Umsetzen eines Zielbehälters (50, 52, 54) von der zweiten Fördertechnikspur (22) auf die Stellfläche (26), und
- einen Kommissionierroboter (16) mit einem Greifarm (48) mit einer vorgegebenen Reichweite zum Kommissionieren von Waren aus dem Quellbehälter (41, 42) in den Zielbehälter (50, 52, 54),
wobei
die Stellfläche (26) wenigstens einen Stellplatz (28, 30, 32) umfasst, der in wenigstens einer Konfiguration der Vorrichtung außerhalb der Reichweite des Greifarms (48) liegt und die Vorrichtung mit einer Verschiebeeinheit (58) ausgestattet ist, die dazu ausgelegt ist, einen auf dem wenigstens einen Stellplatz (28, 30, 32) außerhalb der Reichweite stehenden Zielbehälter (50, 52, 54) relativ zum Kommissionierroboter (16) zu verschieben, so dass der Zielbehälter (50, 52, 54) in der Längsrichtung der Stellfläche (26) in die Reichweite des Greifarms (48) verschoben wird,
**gekennzeichnet durch**
eine Steuerung (60) zum koordinierten Steuern des Kommissionierroboters (16) und der Verschiebeeinheit (58), wobei die Steuerung (60) dazu ausgelegt ist, während mehrerer aufeinander folgender Multi-Order-Kommissioniervorgänge Zielbehälter (50, 52, 54) mit Hilfe der Verschiebeeinheit (58) mehrfach hin und her zu verschieben, ohne dass dazu die zweite Fördertechnikspur (22) betätigt werden muss.

2. Vorrichtung nach Anspruch 1,
**dadurch gekennzeichnet, dass**
die Verschiebeeinheit (58) mehrere unabhängig voneinander steuerbare Segmente zum Verschieben einzelner Zielbehälter (54a - 54e) oder einer Teilmenge von Zielbehältern (54a - 54e) umfasst.

3. Vorrichtung nach einem der vorhergehenden Ansprüche,
**dadurch gekennzeichnet, dass**
die Anzahl der Umsetzer (40, 40a, 40b) kleiner als die Anzahl der Stellplätze (28, 30, 32) ist.

4. Vorrichtung nach Anspruch 1,
**dadurch gekennzeichnet, dass**
die Steuerung (60) dazu ausgelegt ist, simultan mit der Entnahme eines zu kommissionierenden Artikels aus einen Quellbehälter (42) einen Zielbehälter (50, 52, 54), in welchen der Artikel kommissioniert werden soll, mit Hilfe der Verschiebeeinheit (58) in die Reichweite des Greifarms (48) zu verschieben.

5. Vorrichtung nach Anspruch 1 oder 4,
**dadurch gekennzeichnet, dass**
die Steuerung (60) dazu ausgelegt ist, simultan mit der Ablage eines zu kommissionierenden Artikels in einem Zielbehälter (50, 52, 54) einen Quellbehälter (42), aus welchem der in einem Kommissionierauftrag folgende Artikel entnommen werden soll, mit Hilfe der ersten Fördertechnikspur (20) in die Reichweite des Greifarms (48) zu verschieben.

6. Vorrichtung nach einem der vorhergehenden Ansprüche,
**dadurch gekennzeichnet, dass** der Kommissionierroboter (16) ein mobiler Roboter ist, der von der Stellfläche (26) entfernt werden kann, um einen Kommissionierarbeitsplatz für eine menschliche Kommissionierperson freizugeben.

7. Vorrichtung nach einem der vorhergehenden Ansprüche,
**dadurch gekennzeichnet, dass**
die Steuerung (60) dazu ausgelegt ist, die Verschiebeeinheit (58) zu verriegeln, während der Greifarm (48) in einen auf der Stellfläche (26) aufgestellten Behälter greift, insbesondere wenn der Kommissionierroboter (16) in einen Störzustand versetzt wird.

8. Vorrichtung nach einem der vorhergehenden Ansprüche,
**dadurch gekennzeichnet, dass**
die Steuerung (60) dazu ausgelegt ist, zumindest in einem Teil einer Ablagebewegung den Greifarm (48) synchron mit der Verschiebeeinheit (58) zu bewegen.

9. Verfahren zum Kommissionieren von Waren, umfassend die Schritte:
- An- und Abtransport wenigstens eines Quellbehälters (41, 42) mit einer ersten Fördertechnikspur (20, 20a),
- An- und Abtransport von Zielbehältern (50, 52, 54) mit einer zweiten Fördertechnikspur (18, 22),
- Aufstellen mehrerer Zielbehälter (50, 52, 54) auf eine Stellfläche (26), wobei die Stellfläche (26) eine parallel zu der zweiten Fördertechnikspur (18, 22) verlaufende Längsrichtung hat,
- Umsetzen eines Zielbehälters (50, 52, 54) von der zweiten Fördertechnikspur (22) auf eine Stellfläche (26), und
- Kommissionieren von Waren aus dem Quellbehälter (42) in den Zielbehälter (50, 52, 54) mit einem Kommissionierroboter (16) mit einem Greifarm (48) einer vorgegebenen Reichweite,
wobei
die Stellfläche (26) wenigstens einen Stellplatz (28, 30, 32) umfasst, der in wenigstens einer Konfiguration außerhalb der Reichweite des Greifarms (48) liegt und das Verfahren ferner das Verschieben eines auf dem wenigstens einen Stellplatz (28, 30, 32) außerhalb der Reichweite stehenden Zielbehälters (50, 52, 54) relativ zum Kommissionierroboter (16) mittels einer Verschiebeeinheit (58) umfasst, so dass der Zielbehälter (50, 52, 54) in der Längsrichtung der Stellfläche (26) in die Reichweite des Greifarms (48) verschoben wird,
**dadurch gekennzeichnet, dass**
das Verfahren ferner das mehrfache hin und her Verschieben der Zielbehälter (50, 52, 54) mit Hilfe der Verschiebeeinheit (58) während mehrerer aufeinander folgender Multi-Order-Kommissioniervorgänge ohne die Betätigung der zweiten Fördertechnikspur (22) umfasst.

10. Verfahren nach Anspruch 9, ferner umfassend die folgenden Schritte in der angegebenen Reihenfolge:
a) Verschieben eines im nachfolgenden Kommissionierschritt bedienten zweiten Zielbehälters (54c) in die Reichweite des Kommissionierroboters (16) mit der Verschiebeeinheit (58) nach Abschluss eines einen ersten Zielbehälter (54b) betreffenden Teils eines Kommissionierauftrags; und
b) Umsetzen des ersten Zielbehälters (54b) von der Stellfläche (26) auf die zweite Fördertechnikspur (20) durch einen ersten Umsetzer (40a).

11. Verfahren nach Anspruch 10, ferner umfassend den Schritt:
c) Umsetzen eines neuen Zielbehälters (54e) von der zweiten Fördertechnikspur (20) auf die Stellfläche (26) durch einen zweiten Umsetzer (40b) nach Abschluss des Schritts a).

## Claims

1. Apparatus for picking goods, comprising:
- a first conveyor track (20) for supplying and removing source containers (41, 42),
- a second conveyor track (18, 22) for supplying and removing target containers (50, 52, 54),
- at least one storage surface (26) with a plurality of storage locations (28, 30, 32) for setting up a plurality of target containers (50, 52, 54), in particular cartons, wherein the storage surface (26) has a longitudinal direction running parallel to the second conveyor track (18, 22),
- at least one transfer device (40) for transferring a target container (50, 52, 54) from the second conveyor track (22) to the storage surface (26), and
- a picking robot (16) having a gripper arm (48) with a predetermined reach for picking goods from the source container (41, 42) into the target container (50, 52, 54),
wherein
the storage area (26) comprises at least one storage location (28, 30, 32) which, in at least one configuration of the device, lies outside the reach of the gripper arm (48), and the device is equipped with a displacement unit (58) which is configured to displace a target container (50, 52, 54) standing on the at least one storage location (28, 30, 32) outside the reach relative to the picking robot (16), so that the target container (50, 52, 54) is displaced in the longitudinal direction of the storage surface (26) into the reach of the gripper arm (48),
**characterised by**
a controller (60) for coordinated control of the picking robot (16) and the displacement unit (58), wherein the controller (60) is configured to displace target containers (50, 52, 54) back and forth several times with the aid of the displacement unit (58) during several successive multi-order picking operations without the second conveyor track (22) having to be actuated for this purpose.

2. Device according to claim 1,
**characterised in that**
the displacement unit (58) comprises a plurality of independently controllable segments for displacing individual target containers (54a - 54e) or a subset of target containers (54a - 54e).

3. Device according to one of the preceding claims,
**characterised in that**
the number of transfer devices (40, 40a, 40b) is smaller than the number of storage locations (28, 30, 32).

4. Device according to claim 1,
**characterised in that**
the controller (60) is configured to move a target container (50, 52, 54), into which the article is to be picked with the aid of the displacement unit (58), into the reach of the gripper arm (48) simultaneously with the removal of an article to be picked from a source container (42).

5. Device according to claim 1 or 4,
**characterised in that**
the controller (60) is designed to move a source container (42), from which the article following in a picking order is to be removed, into the reach of the gripper arm (48) simultaneously with the depositing of an article to be picked in a target container (50, 52, 54) with the aid of the first conveyor track (20).

6. Device according to one of the preceding claims,
**characterised in that** the picking robot (16) is a mobile robot which can be removed from the storage surface (26) in order to release a picking workstation for a human picker.

7. Device according to one of the preceding claims,
**characterised in that**
the controller (60) is adapted to lock the displacement unit (58) while the gripper arm (48) grips into a container placed on the storage surface (26), in particular when the order picking robot (16) is put into an interference state.

8. Device according to one of the preceding claims,
**characterised in that**
the controller (60) is designed to move the gripper arm (48) synchronously with the displacement unit (58) at least in part of a depositing movement.

9. Method for picking goods, comprising the steps:
- supplying and removing at least one source container (41, 42) using a first conveyor track (20, 20a),
- supplying and removing target containers (50, 52, 54) with a second conveyor track (18, 22),
- placing a plurality of target containers (50, 52, 54) on a positioning surface (26), wherein the positioning surface (26) has a longitudinal direction running parallel to the second conveyor technology track (18, 22),
- transferring a target container (50, 52, 54) from the second conveyor track (22) to a storage surface (26), and
- picking goods from the source container (42) into the target container (50, 52, 54) using a picking robot (16) with a gripper arm (48) having a predetermined reach,
wherein
the storage area (26) comprises at least one storage location (28, 30, 32) which in at least one configuration lies outside the reach of the gripper arm (48), and the method further comprises displacing a target container (50, 52, 54) standing on the at least one storage location (28, 30, 32) outside the reach relative to the picking robot (16) by means of a displacement unit (58), so that the target container (50, 52, 54) is displaced in the longitudinal direction of the storage area (26) into the reach of the gripper arm (48),
**characterised in that**
the method further comprises shifting the target containers (50, 52, 54) back and forth several times with the aid of the shifting unit (58) during several successive multi-order picking operations without actuating the second conveyor track (22).

10. Method according to claim 9, further comprising the following steps in the order indicated:
(a) moving a second target container (54c) served in the subsequent picking step into the reach of the picking robot (16) with the moving unit (58) after completion of a part of a picking order relating to a first target container (54b); and
(b) transferring the first target container (54b) from the storage area (26) to the second conveyor track (20) by a first transfer unit (40a).

11. Method according to claim 10, further comprising the step of:
(c) transferring a new target container (54e) from the second conveyor track (20) to the footprint (26) by a second transfer device (40b) after completion of step (a).

## Revendications

1. Dispositif pour la préparation de commandes de marchandises, comprenant :
- une première voie de technique de transport (20) pour l'arrivée et le départ de récipients sources (41, 42),
- une deuxième voie de technique de transport (18, 22) pour l'arrivée et le départ de récipients cibles (50, 52, 54),
- au moins une surface de pose (26) comprenant plusieurs emplacements de pose (28, 30, 32) pour poser une pluralité de récipients cibles (50, 52, 54), en particulier des cartons, dans lequel la surface de pose (26) a un sens longitudinal parallèle à une des deuxièmes voies de technique de transport (18, 22),
- au moins un envoyeur (40) pour envoyer un récipient cible (50, 52, 54) de la deuxième voie de technique de transport (22) sur la surface de pose (26), et
- un robot de préparation de commandes (16) comprenant un bras préhenseur (48) avec une portée prédéfinie pour la préparation de commandes de marchandises du récipient source (41, 42) dans le récipient cible (50, 52, 54), dans lequel
la surface de pose (26) comprend au moins un emplacement de pose (28, 30, 32) qui est hors de la portée du bras préhenseur (48) dans au moins une configuration du dispositif, et le dispositif est doté d'une unité de déplacement (58) qui est conçue pour déplacer un récipient cible (50, 52, 54) positionné hors de la portée sur l'au moins un emplacement de pose (28, 30, 32), par rapport au robot de préparation de commandes (16), de façon à ce que le récipient cible (50, 52, 54) soit déplacé dans la portée du bras préhenseur (48) dans le sens longitudinal de la surface de pose (26), **caractérisé par**
une commande (60) pour la commande coordonnée du robot de préparation de commandes (16) et de l'unité de déplacement (58), dans lequel la commande (60) est conçue, pendant plusieurs procédures de préparation de commandes multi-commandes consécutives, pour déplacer des récipients cibles (50, 52, 54) plusieurs fois d'avant en arrière à l'aide de l'unité de déplacement (58), sans que la deuxième voie de technique de transport (22) ne doive être actionnée pour cela.

2. Dispositif selon la revendication 1, **caractérisé en ce que** l'unité de déplacement (58) comprend une pluralité de segments pouvant être commandés indépendamment les uns des autres pour déplacer des récipients cibles individuels (54a - 54e) ou une quantité partielle de récipients cibles (54a - 54e).

3. Dispositif selon l'une des revendications précédentes, **caractérisé en ce que** le nombre d'envoyeurs (40, 40a, 40b) est inférieur au nombre d'emplacements de pose (28, 30, 32).

4. Dispositif selon la revendication 1, **caractérisé en ce que** la commande (60) est conçue pour, simultanément avec le prélèvement d'un article à préparer d'un récipient source (42), déplacer dans la portée du bras préhenseur (48) un récipient cible (50, 52, 54) dans lequel l'article doit être préparé, à l'aide de l'unité de déplacement (58).

5. Dispositif selon la revendication 1 ou 4, **caractérisé en ce que** la commande (60) est conçue pour, simultanément avec la dépose d'un article à préparer dans un récipient cible (50, 52, 54), déplacer dans la portée du bras préhenseur (48) un récipient source (42) duquel l'article suivant dans une commande de préparation doit être prélevé, à l'aide de la première voie de technique de transport (20).

6. Dispositif selon l'une des revendications précédentes, **caractérisé en ce que** le bras de préparation de commandes (16) est un robot mobile qui peut être éloigné de la surface de pose (26) pour libérer un emplacement de travail de préparation de commandes pour un préparateur de commandes humain.

7. Dispositif selon l'une des revendications précédentes, **caractérisé en ce que** la commande (60) est conçue pour verrouiller l'unité de déplacement (58), pendant que le bras préhenseur (48) saisit dans un récipient placé sur la surface de pose (26), en particulier lorsque le robot de préparation de commandes (16) est déplacé dans un état de défaut.

8. Dispositif selon l'une des revendications précédentes, **caractérisé en ce que** la commande (60) est conçue pour se déplacer de manière synchrone avec l'unité de déplacement (58), au moins dans une partie d'un mouvement de dépose du bras préhenseur (48).

9. Procédé pour la préparation de commandes de marchandises, comprenant les étapes de :
- arrivée et départ d'au moins un récipient source (41, 42) avec une première voie de technique de transport (20, 20a),
- arrivée et départ de récipients cibles (50, 52, 54) avec une deuxième voie de technique de transport (18, 22),
- pose d'une pluralité de récipients cibles (50, 52, 54) sur une surface de pose (26), dans lequel la surface de pose (26) a un sens longitudinal parallèle à la deuxième voie de technique de transport (18, 22),
- envoi d'un récipient cible (50, 52, 54) de la deuxième voie de technique de transport (22) sur la surface de pose (26), et
- préparation de commandes de marchandises du récipient source (42) dans le récipient cible (50, 52, 54) avec un robot de préparation de commandes (16) comprenant un bras préhenseur (48) d'une portée prédéfinie, dans lequel
la surface de pose (26) comprend au moins un emplacement de pose (28, 30, 32) qui est hors de la portée du bras préhenseur (48) dans au moins une configuration, et le procédé comprend en outre le déplacement d'un récipient cible (50, 52, 54) positionné hors de la portée sur l'au moins un emplacement de pose (28, 30, 32), par rapport au robot de préparation de commandes (16), au moyen d'une unité de déplacement (58), de façon à ce que le récipient cible (50, 52, 54) soit déplacé dans la portée du bras préhenseur (48) dans le sens longitudinal de la surface de pose (26),
**caractérisé en ce**
**que** le procédé comprend en outre le déplacement plusieurs fois d'avant en arrière des récipients cibles (50, 52, 54) à l'aide de l'unité de déplacement (58), pendant plusieurs procédures de préparation de commandes multi-commandes consécutives, sans l'actionnement de la deuxième voie de technique de transport (22).

10. Procédé selon la revendication 9, comprenant en outre les étapes suivantes dans l'ordre indiqué :
a) déplacement d'un deuxième récipient cible (54c) manoeuvré dans l'étape de préparation de commandes suivante dans la portée du robot de préparation de commandes (16) avec l'unité de déplacement (58) à la fin d'une partie d'une commande de préparation concernant un premier récipient cible (54b) ; et
b) envoi du premier récipient cible (54b) de la surface de pose (26) sur la deuxième voie de technique de transport (20) par un premier envoyeur (40a).

11. Procédé selon la revendication 10, comprenant en outre l'étape :
c) d'envoi d'un nouveau récipient cible (54e) de la deuxième voie de technique de transport (20) sur la surface de pose (26) par un deuxième envoyeur (40b) à la fin de l'étape a).
